# EUROPEAN PATENT APPLICATION

(11) **EP 2 145 600 A1**
(43) Date of publication of application: **20.01.2010**
(21) Application number: 08012703.8
(22) Date of filing: 14.07.2008
(51) Int. Cl.: A61C 8/00

(54) **Improved fixture of two-piece dental implants**

(71) Applicant: Nobel Biocare Services AG, 8058 Zürich-Flughafen (CH)
(72) Inventor: Renouard, Franck, 75116 Paris (FR); Jörneus, Lars, 43030 Frillesås (SE)
(74) Representative: Byström, Kurt Linus

(57) **Abstract**

A fixture (3) of a two-piece dental implant is disclosed comprising a first, apical portion (30) having a bone length, and comprising a helical thread (31) having a maximum outer diameter; a top portion (32) arranged opposite said first, apical portion (30); an internal threaded cavity (33) for releasably receiving at least one of a surgeon tool and a prosthetic component; and a second, coronal portion (34) devised for apposition to soft tissue (70) and for connective tissue attachment; wherein said second, coronal portion (34) has an extension in the longitudinal direction of said dental implant (3) that is devised to be less than a layer thickness of said soft tissue (70); and wherein a ratio of said bone length to said maximum outer diameter is in the range from approximately 0,8 to 1,2. Furthermore, a method of improving stability of dental implants in bone tissue is disclosed.

## Description

### Field of the Invention

This invention pertains in general to the field of anchoring fixtures for implants. More particularly, the invention pertains to threaded fixtures of cranial implants, such as dental implants and in particular two-piece dental implants.

### Background of the Invention

Various dental implants are known. Short implants are chosen where not sufficient bone tissue is available, e.g. in edentulous patients where the available bone tissue has been substantially reduced by bone resorption. This is especially the case for the lower jaw, the mandibula. However, even the shortest conventionally available dental implants are in some cases too long for this task because for instance too little bone tissue material is available for a secure, stable fixation of the dental implants in the bone tissue, or because even these available dental implants are so long that they penetrate the entire depth of bone tissue available and protrude on an opposite side of the jaw bone tissue, which is unacceptable. Nerves and blood vessels that extend along the jaw bone are further locally limiting the available depth for dental implants in the jaw bone tissue. Hence, there is a need for shorter dental implants than conventionally available while stability of the short implant in the bone tissue is at least as good as for conventionally available dental implant, or improved.

Conventional dental implants comprise one-piece dental implants that have an integrated fixture for bone fixation and a transmucosal portion. However, one-piece dental implants are subject to loading during a healing phase. Overloading may easily occur, leading to bone resorption and thus deteriorated bone fixation of the one-piece dental implant. This applies in particular to short one-piece dental implants.

Conventional dental implants further comprise two-piece dental implants that have a fixture element for fixation in bone tissue and a separate transmucosal abutment element. For instance WO05072639A (Rompen) of the same applicant as the present application discloses a two-piece dental implant having a transmucosal component for a dental implant intended to support a prosthetic restoration. The transmucosal component has a waist-shaped or inwardly narrowed portion having contact with a surface whose distance in longitudinal direction corresponds to a required width of adjoining soft tissue. Thus a dental unit is formed, which is well anchored in the jaw bone and gum, and which permits an excellent and durable degree of integration between the jaw bone or gum and the adjoining portions of the transmucosal component or fixture, as well as avoids bone resorption and subsidence tendencies.

However, due to the construction of the dental implant, the minimum length of the conventional implants disclosed in WO05072639A, leaves room for improvements for the above mentioned specific situations where short implants are required. In addition, conventional dental restorations may not be used with the type of specific waist-shaped transmucosal components disclosed in WO05072639A.

Another issue with conventional dental implants is that the marginal bone level often decreases during a time period following implantation. This may be due to biomechanical factors and leads to an initial loss of stability, i.e. a primary stability dip occurs. For instance, a purely mechanical strain in the surrounding bone may be excessive and the primary stability of the implant becomes too low, such that the implant loosens from the jaw bone tissue. This factor may be improved by a suitable design of the implant that gives a good primary stability upon implantation. However, another reason for bone resorption is that soft tissue grows along the implant body and partly pushes bone tissue away from contact with the implant body, leading to a loss of stability of the implant in the jaw bone tissue.

The mucosal tissue has a surface layer of junctional epithelium. Below the junctional epithelium a layer of connective tissue provides a tight connection in the transmucosal channel of an implant based dental restoration. Conventionally the transmucosal component of two-part dental implants is an abutment fixated to the fixture implanted in bone tissue. However, this arises some issues. For instance after a healing phase upon initial implantation of the fixture, the abutment is removed from the fixture in order to determine the position of the fixture by making an impression, such that the final dental restoration may be produced. However, this removal of the abutment may lead to a decreased level of soft tissue and thus a decreased marginal bone level.

Conventional fixtures of two-piece dental implants available on the market have a minimal length of approximately 7 mm to 10 mm. However, even these fixtures may be unsuitable for specific applications, as discussed above.

Hence, an improved fixture for a two-piece dental implant would be advantageous and in particular a fixture for a two-piece dental implant allowing for flexibility, patient safety, and/or implantation stability would be advantageous.

### Summary of the Invention

Accordingly, embodiments of the present invention preferably seeks to mitigate, alleviate or eliminate one or more deficiencies, disadvantages or issues in the art, such as the above-identified, singly or in any combination by providing a fixture of a two-piece dental implant, and a method of improving stability of dental implants in bone tissue according to the appended independent patent claims.

According to one aspect of the invention., a fixture for a two-piece dental implant is for implantation at an implantation site comprising bone tissue and soft tissue. The fixture comprises a first, apical portion that has a bone length devised for apposition to bone tissue and comprises a helical thread that has a maximum outer diameter; a top portion arranged opposite the first, apical portion, in a longitudinal direction of said fixture; an internal threaded cavity for releasably receiving at least one of a surgeon tool and a prosthetic component, which extends from an opening at the top portion towards the first, apical portion; and a second, coronal portion devised for apposition to soft tissue and for connective tissue attachment, which second, coronal portion is arranged from the top portion towards the first, apical portion; wherein the second, coronal portion has an extension in the longitudinal direction of the fixture that is devised to be less than a layer thickness of the soft tissue; and wherein a ratio of the bone length to the maximum outer diameter is in the range from approximately 0,8 to 1,2.

According to another aspect of the invention, a method is of improving stability of dental implants in bone tissue provided. The method comprises implanting a fixture of a two-piece dental implant according to the first aspect of the invention in bone tissue. The implanting comprises appositioning to bone tissue of an apical portion comprising a helical thread of the dental implant by rotational movement of a surgeon tool releasably interlocking with a top portion of the dental implant having a threaded cavity until a coronal portion of the dental implant is appositioned to soft tissue above the bone tissue and the apical portion is positioned below a crest of the bone tissue, whereby the coronal portion is embedded in a connective tissue portion of the soft tissue.

Further embodiments of the invention are defined in the dependent claims.

Some embodiments of the invention provide for avoidance of bone resorption.

Some embodiments of the invention provide for improved bone anchoring of dental implants.

Some embodiments of the invention provide for improved primary stability of dental implants.

Some embodiments provide for a decreased length of a two piece dental implant at maintained bone anchor area.

Some embodiments provide for a stable insertion of the dental implant into bone tissue.

Some embodiments provide for an advantageous length of connective tissue along a coronal neck or collar of a dental implant resulting in stable bone fixation of the dental implant.

Some embodiments provide for an advantageous esthetics as no portions of dental implants protrude from the gingiva.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a perspective view of a two-piece dental implant having a collar with extended diameter;
Figs. 2A, 2B, 2C, and 2D are a lateral view, a cross sectional lateral view, a top view, and a view from below of the dental implant of Fig. 1;
Fig. 3A is a perspective view of an embodiment of a two-piece dental implant having a smooth collar portion with reduced diameter;
Fig. 3B is a lateral view showing the implant of Fig. 3A with various indexed extensions;
Figs. 4A, 4B, 4C, and 4D are a lateral view, a cross sectional lateral view, a top view, and a view from below of the dental implant of Fig. 3A;
Fig. 5 is a schematic view of a two-piece dental implant implanted in bone tissue;
Fig. 6 is lateral view of an insertion tool for implantation of embodiments of two-piece dental implants;
Figs. 7A, 7B, and 7C are a top view, a lateral view, and a lateral cross sectional view of the tool of Fig. 6 inserted into an embodiment of a two-piece dental implant;
Fig. 8 is a perspective view of another embodiment of a two-piece dental implant having a collar with a macro groove;

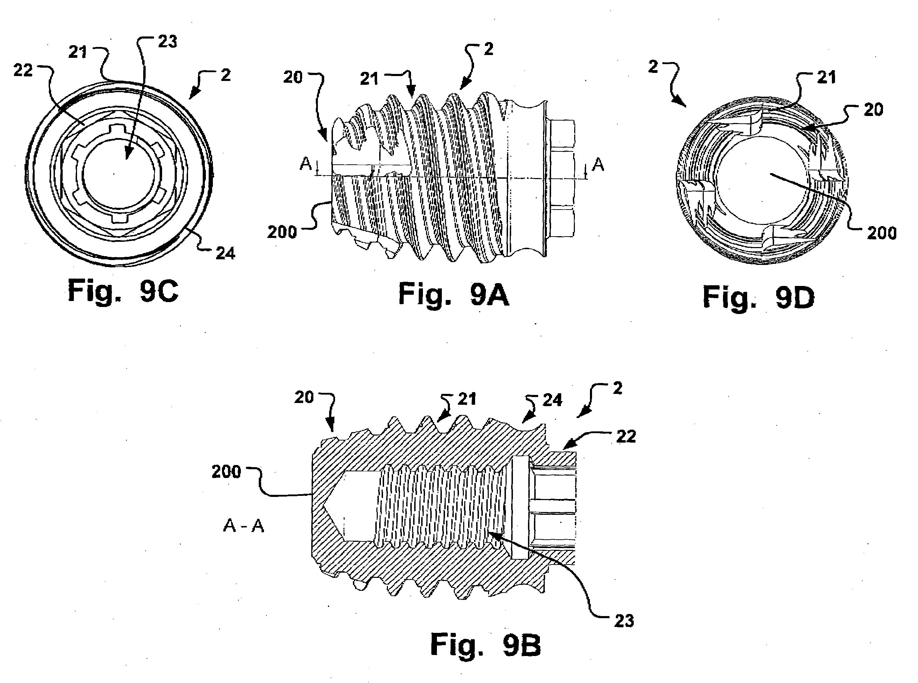

Figs. 9A, 9B, 9C, and 9D are a lateral view, a cross sectional lateral view, a top view, and a view from below of the dental implant of Fig. 8;
Fig. 10 is a perspective view of another embodiment of a two-piece dental implant having a collar with micro grooves;

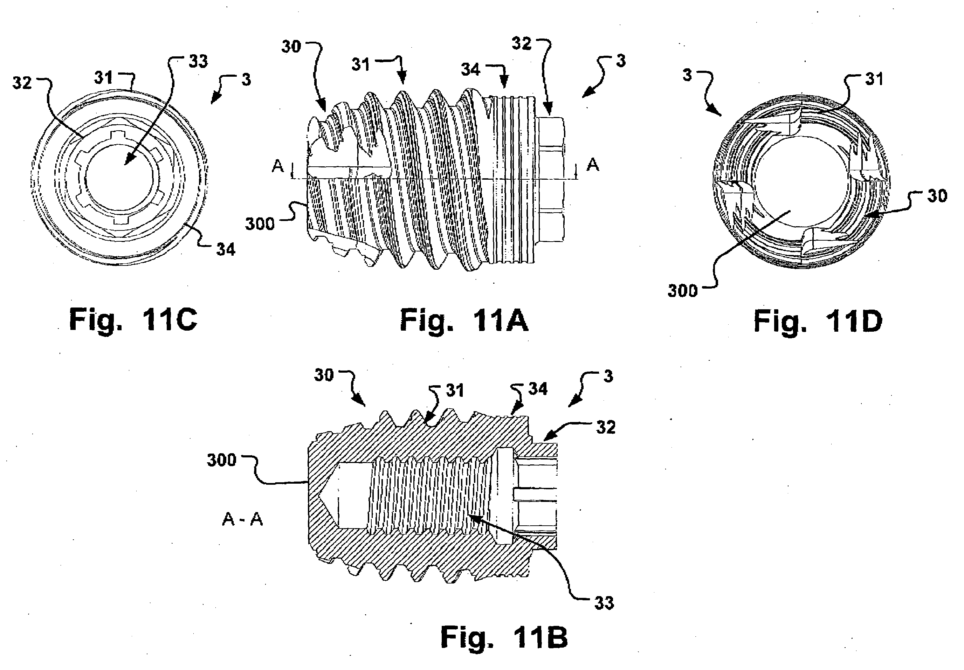

Figs. 11A, 11B, 11C, and 11D are a lateral view, a cross sectional lateral view, a top view, and a view from below of the dental implant of Fig. 10.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on embodiments of the present invention applicable to dental implants. However, it will be appreciated that the invention is not limited to this application but may be applied to many other implants, such as cranial anchoring implants for maxillofacial restorations, ear restorations, etc.

Two-piece dental implants comprise a fixture for anchoring in bone tissue and an abutment element that is releasably arranged on the fixture. As a wide variety of abutment elements is available, two-piece dental implants allow for more flexibility with regard to specific patient situations, e.g. concerning physical dimensions or aesthetic aspects such as color if the abutment portion is at least partly visible.

Embodiments of the present invention are referring to two-piece dental implants, wherein the term "dental implant" in the context of present embodiments refers solely to the above mentioned fixture element of a two-piece dental implant for fixation in bone tissue, and does not comprise a separate transmucosal abutment element. In more detail, the dental implant is implanted in bone tissue, e.g. in a bore thereof. During a healing period, the dental implant is integrated with surrounding bone tissue and thus secured in place. An abutment is fixated to the dental implant for an artificial dental restoration to sit upon. The dental restoration may be a replacement tooth, a dental bridge, a permanent denture, etc. attached to the abutment.

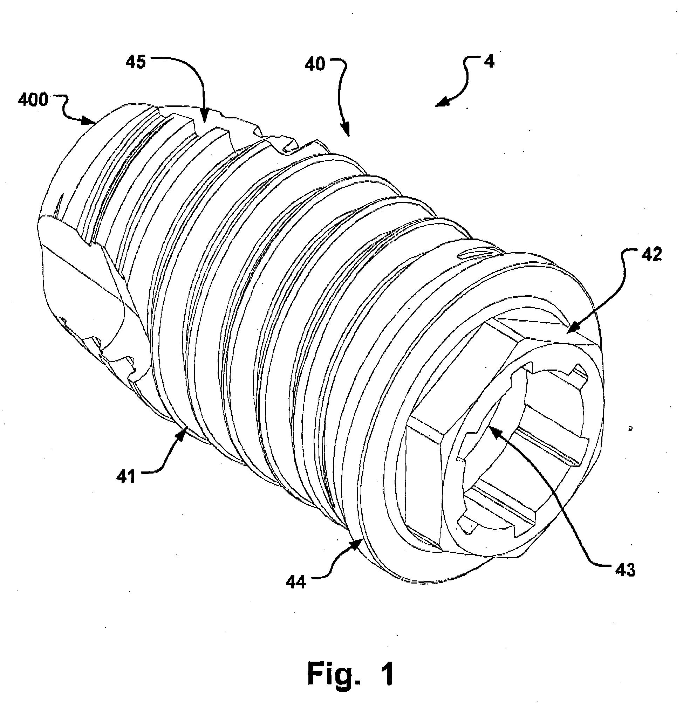

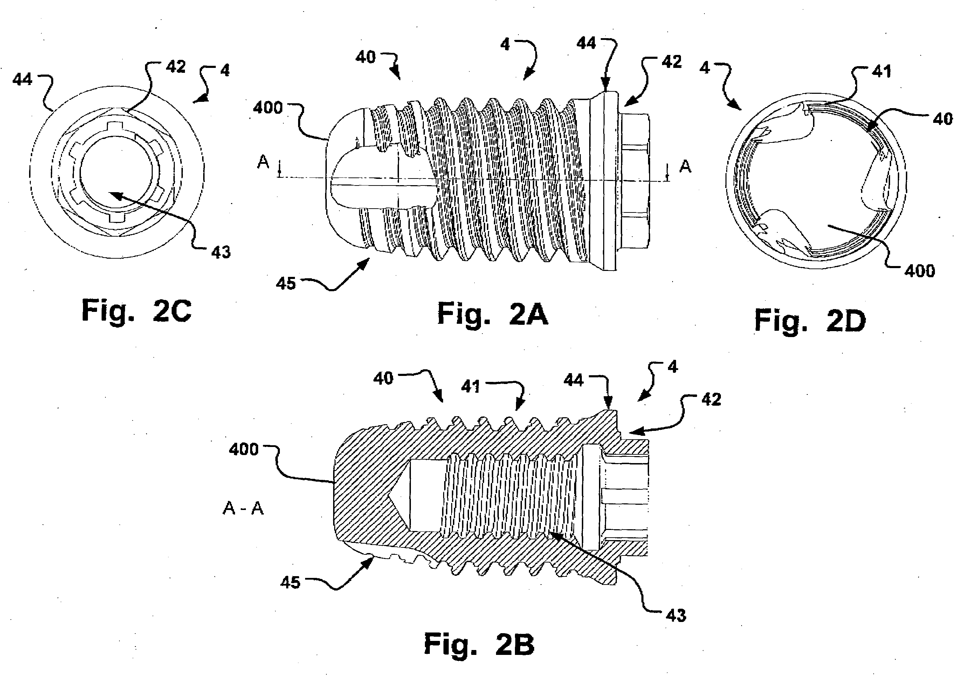

In Fig. 1 and Figs. 2A-D a fixture element of a two-piece dental implant 4 having a collar with extended diameter is shown. The dental implant 4 comprises an apical portion 40 for apposition to bone tissue, and a substantially cylindrical helical thread 41. The helical thread 41 is slightly tapered in an apical end portion 45 towards the apical end 400. Furthermore, the thread may comprise one or several helical thread spirals. The apical end portion 45 is tapered frusto conical, and non-threaded towards the apical end 400, i.e. the helical thread 41 terminates at a distance from the apical end 400. The tapering is intended to facilitate introduction of the dental implant 4 upon implantation into a bore prepared in bone tissue. Further, the dental implant 4 comprises a top portion 42 with a collar 44 of increased diameter compared to the maximum diameter of the cylindrical thread 41. The maximum outer diameter of the collar 44 is dimensioned to fit into a beveled top edge of a bore in bone tissue prepared by a countersink cutter prior to implantation of dental implant 4.

The dental implant 4 has an internal, at least partly threaded cavity 43 emerging from the top portion 42.

The dental implant 4 is for instance suitable for use as described in WO05072639A. However, even this dental implant 4 may be unsuitable for specific applications, as discussed above.

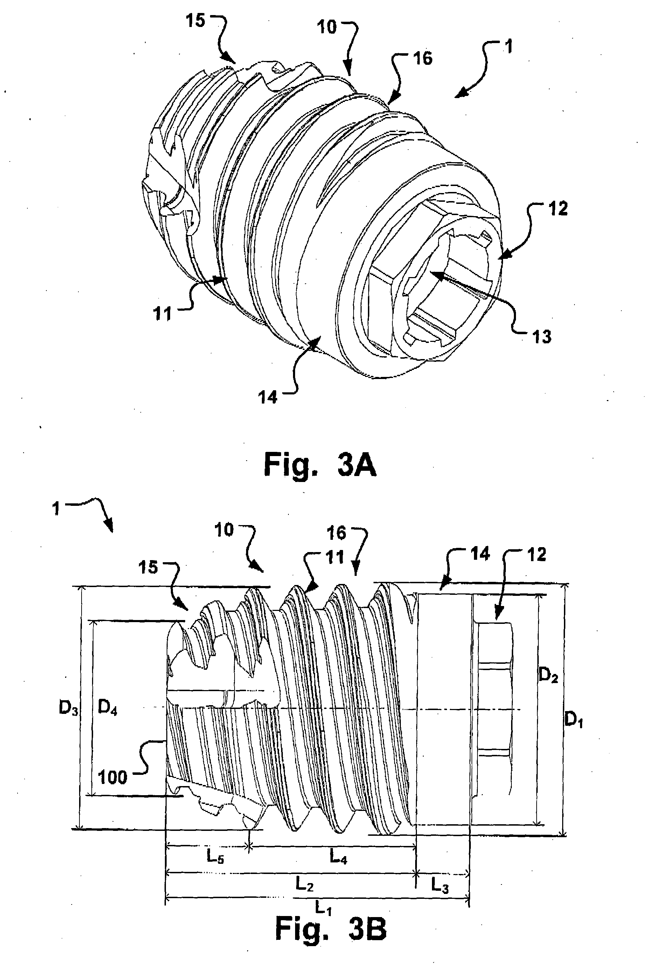

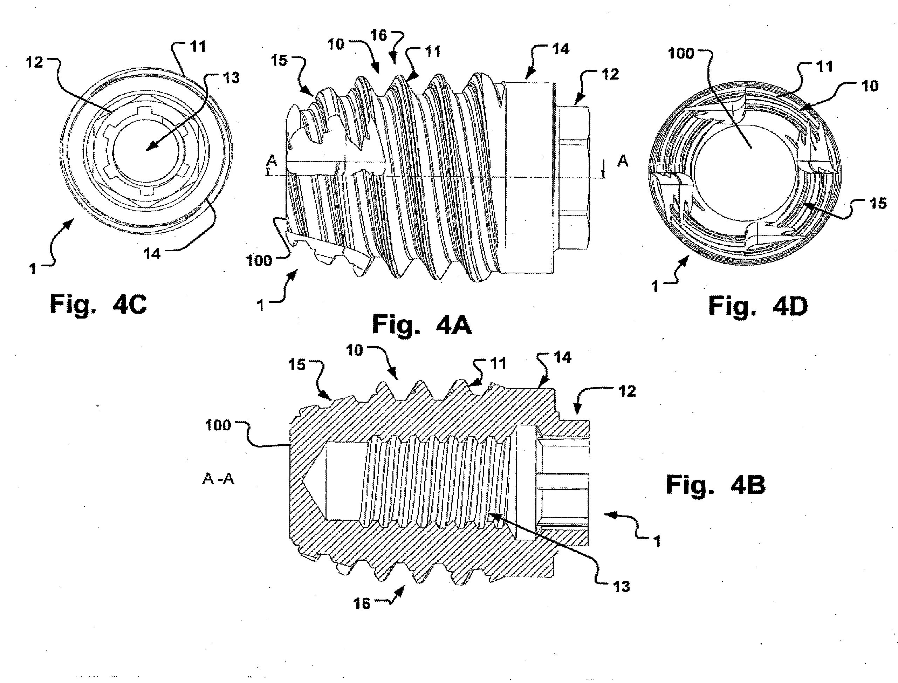

An embodiment of a fixture element of a two-piece dental implant 1 is shown in Fig. 3A, 3B and in Figs. 4A, 4B, 4C, and 4D. The dental implant 1, i.e. the fixture element or bone anchoring element thereof comprises an apical portion 10 devised for apposition to bone tissue. The apical portion 10 has a bone length L₂. The apical portion 10 comprises a helical thread 11 that is tapered, ending in an apical end 100 of the dental implant 1. The helical thread 11 has a maximum outer diameter D₁ at a coronal end of the tapered helical thread 11. The maximum outer diameter D₁ of the helical thread 11 is also the maximum outer diameter of the fixture element.

The tapered helical thread 11 extends all the way along the bone length L₂ from a coronal portion 14 to the apical end 100. The dental implant 1 comprises a plurality of portions with different conicity, i.e. portions with a different angle of taper in relation to the longitudinal axis of the dental implant 1. A first tapered portion 16 of the helical thread 11 of the apical portion 10 extends along a longitudinal length L₄ from the coronal portion 14. The first tapered portion 16 adjoins a second tapered portion 15 having a length L₅. The second tapered portion 15 extends completely to the apical end 100.

The apical end 100 of the conically tapered helical thread 11 is truncated by a plane substantially perpendicular to the longitudinal axis of the dental implant 1.

Other embodiments of dental implants may have one or more different angles of taper.

Thanks to the fact that the helical thread 11 has one or more tapered portions, an advantageous, increased mechanical stability in bone tissue is provided upon implantation, as micro movements in the bone tissue between the dental implant 1 and the bone tissue are minimized. Thus, bone resorption caused by such micro movements is minimized. In particular, primary stability of the dental implant is thus improved upon implantation. In a practical implementation of an embodiment the conicity of the first tapered portion of the helical thread 11, i.e. the difference between diameter D₁ and D₃ as shown in Fig. 3B, is approximately 0,2 mm. D3 is an outer diameter at the position of the dental implant where the first tapered portion and the second tapered portion adjoin each other.

Further, the dental implant 1 comprises a top portion 12 arranged opposite, in the longitudinal direction of the dental implant 1, to the apical portion 10. An internal, at least partly threaded cavity 13 is emerging from an opening comprised in the top portion 12. The at least partly threaded cavity 13 may releasably receive one of a surgeon tool 50, a prosthetic component 60, or similar elements known in the art.

In the illustrated embodiment, the top portion 12 comprises a force transmitting connection interface in a protruding hexagonal form. The connection interface is provided to enable a rotational torque transfer from a suitable tool to the dental implant. In other embodiments, the force transmitting connection interface may have another design, such as having four, five, seven, eight, nine or ten force transmitting surfaces, which in addition may be arranged star formed, torx formed, etc. The force transmitting connection interface, such as the hexagon illustrated, may also be positioned inside a coronal portion 14.

The coronal portion 14 of the dental implant 1 is devised for apposition to soft tissue 70, and for connective tissue attachment. The coronal portion 14 is arranged from the top portion 12 towards the apical portion 10, and has an extension L₃ in the longitudinal direction of the dental implant 1 that is devised to be less than a layer thickness of the soft tissue 70.

The coronal portion 14 is provided as a collar extending from a coronal end portion of the thread 11 to the top portion 12. As can be seen in the Figures, the coronal portion 14 has an external maximum diameter that is less than the maximum diameter of the helical thread 11. The coronal portion 14 of the dental implant 1 is formed straight or may be formed smooth, e.g. in parallel or angled to the longitudinal axis of the dental implant 1.

A typical surface roughness of the coronal portion 14 may be in the magnitude of 5 micrometers, providing advantageous connective tissue attachment upon implantation.

The coronal portion 14 may be provided as an integrated short abutment on the dental implant 1.

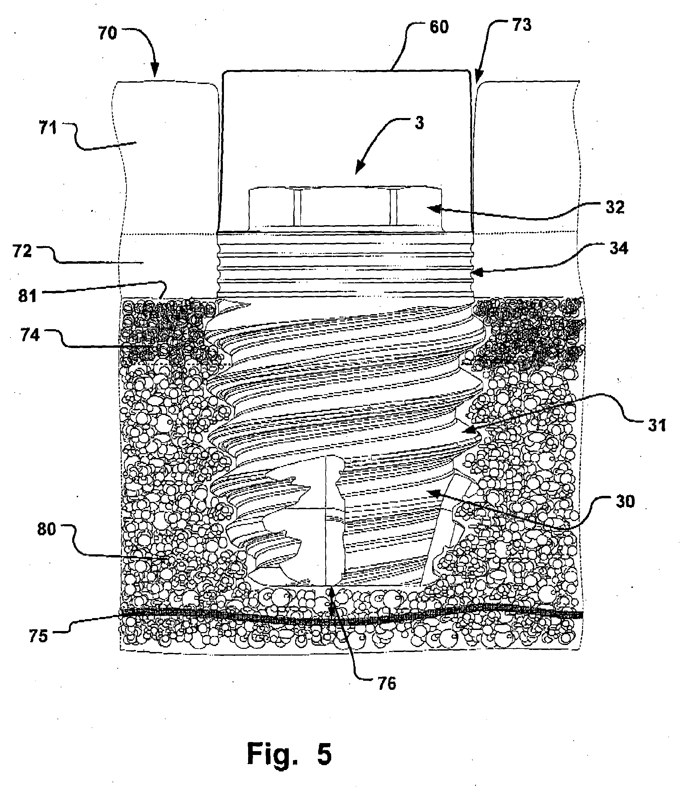

The coronal portion 14 provides an advantageous basis for connective tissue formation around the coronal portion 14 on the implant. This connective tissue formation contributes to improving the stability and integration of the dental implant in bone tissue and to preventing bone resorption as the gingival crevice 73 (see Fig. 5) will not continue to extend down, along the dental implant, e.g. in connection with changing a temporary healing abutment 60, as described below.

Thus, the coronal portion 14 is devised to minimize e.g. the risk for soft tissue related bone resorption.

An even further increased stabilization of the soft tissue may be achieved by providing the coronal portion 14 in addition or alternatively with macro and/or micro recesses or grooves, such as described below with reference to other embodiments of dental implants 2, 3. The macro and/or the micro recesses or grooves may in some embodiments be circumferentially extending, annular recesses or grooves.

The coronal portion 14 has an extension in the longitudinal direction of the dental implant 1 that is less than a layer thickness of the soft tissue. The coronal portion 14 is devised for apposition to soft tissue 70 and for connective tissue attachment. The coronal portion 14 is arranged from the top portion towards the apical portion 10, as illustrated in the Figures. In this manner the coronal portion 14 is, upon implantation, arranged embedded inside the layer of soft tissue 71, providing an aesthetically advantageous arrangement as it is hidden in the gingiva and not visible.

The extension of the coronal portion 14 may be chosen to be substantially equal to a height of connective tissue 72 of the soft tissue 71 at an implantation site. A height of connective tissue 72 may be in the range of 0,7 to 2 mm, typically 1 mm.

The second, coronal portion 14 has an extension L₃ in the longitudinal direction of the dental implant 1 that is devised to be less than a layer thickness of said soft tissue 70. In practical implementations the coronal portion has an extension in longitudinal direction of the dental implant 1 in the range of approximately 0,7 to 2 mm, typically 1 mm.

The extension of the coronal portion 14 may be devised to promote growth of connective tissue 72.

A portion of the apical portion 10 is devised to be appositioned to a cortical bone tissue 74 of the bone tissue 80.

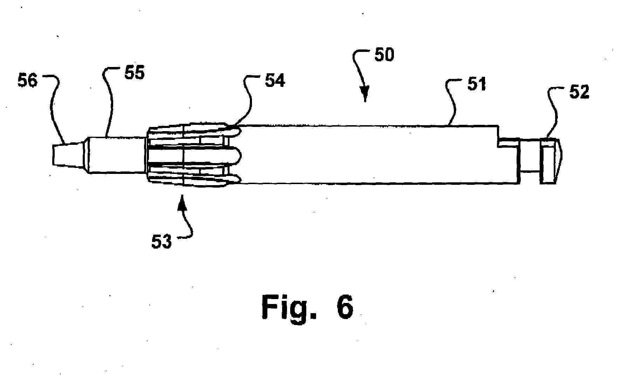

Fig. 6 is a lateral view of an insertion tool 50 for implantation of embodiments of two-piece dental implants. The tool 50 has a proximal end for rotational engagement of a rotational force providing unit. An elongated shaft 51 extends to a distal portion 55 towards a distal end 56. An engagement portion 53 comprises engagement elements 54 for transmitting the rotational movement from the rotational force providing unit to the implant.

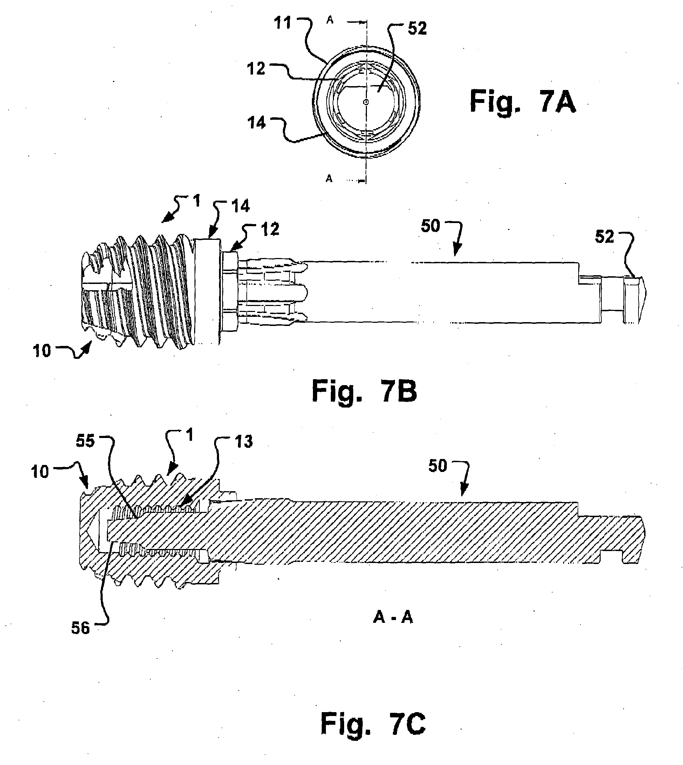

Figs. 7A, 7B, and 7C are a top view, a lateral view, and a lateral cross sectional view of the tool of Fig. 6 inserted into an embodiment of a fixture of a two-piece dental implant 1.

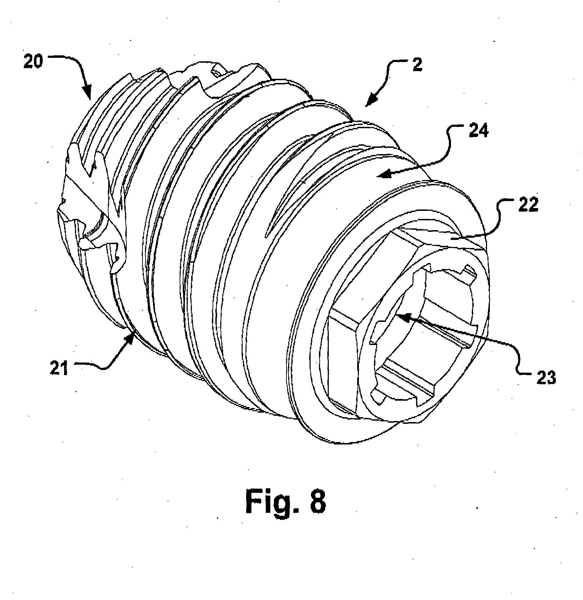

Another embodiment of a fixture of a two-piece dental implant 2 is shown in Fig. 8. The fixture of the dental implant 2 has a coronal portion 24 with a macro groove. The macro groove is a curved recess providing advantageous soft tissue integration. Other embodiments may be provided with a plurality of macro grooves. The macro grovve may have a maximum depth in the range of 0.05 to 0.2 mm, typically 0.1 mm. The macro groove may have an extension in the longitudinal direction of the implant in the range of 0.05 to 1.8 mm, typically 0.8 mm. The design of the macro groove may be dependent on the design of the coronal portion 14.

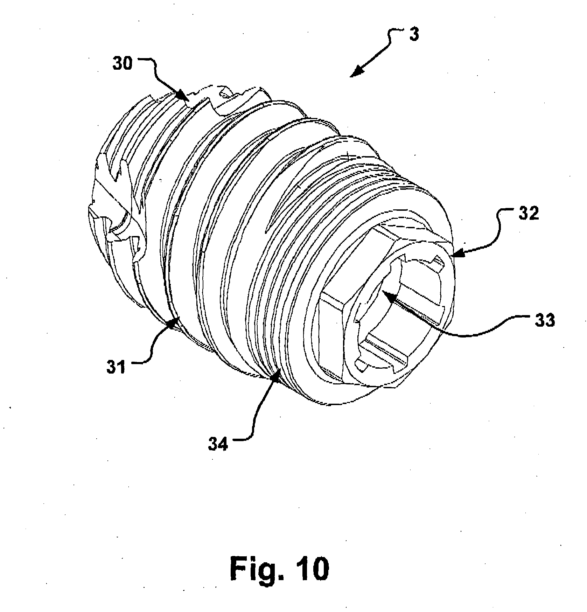

A further embodiment of a fixture of a two-piece dental implant 3 is shown in Fig. 10. The fixture of the dental implant 3 has a coronal portion 24 with a plurality of micro recesses or grooves providing an advantageous soft tissue integration of the coronal portion 24. The micro grooves have in some practical embodiments typically a maximum depth in the magnitude of 0,05 mm.

The apical portion 10, 20, 30 of embodiments of the fixtures of the dental implants 1, 2, 3 is devised to be arranged at or below an alveolar ridge 81 of the bone tissue 80.

The threaded cavity 13, 23, 33 of embodiments of the fixtures of dental implants has a depth in ratio to a total length of the dental implant that provides for a control length for threaded insertion into the bone tissue. A sufficient control length is important for controlling an insertion direction during insertion of a dental implant, in particular when the dental implant is to be inserted into bone tissue offering narrow margins, e.g. when little remaining bone tissue is available for implantation due to bone resorption, as described in the section "Background of the invention" above.

This provides a reduced bone resorption at the implantation site upon insertion of the fixture, as a stable insertion of the fixture is ensured without any wobbling movement during insertion. The insertion tool 50 is provided with sufficient directional stability as the distal portion 55 of the tool 50 has a sufficient length. This ensures a sufficient primary stability of the dental implant.

As illustrated in the example in Fig. 3B, a fixture of a dental implant according to embodiments may be distinguished by the following proportions:
L₂ : bone length of a portion for apposition of a dental implant to bone tissue;
L₃ : soft tissue length, i.e. length of portion of a dental implant for connective tissue attachment;
L_{1 :} total length of L₂ and L₃;
L₄ : longitudinal length of a first tapered portion of the helical thread of the apical portion extending from the coronal portion of the dental implant;
L₅ : longitudinal length of a second tapered portion of the helical thread of the apical portion extending from the apical end of the dental implant to the first tapered portion;
D₁ : maximum outer diameter of thread 11 at transition to the coronal portion 14;
D₂ : maximum outer diameter of the coronal portion 14;
D₃ : maximum outer diameter of the helical thread 11 at a tapered apical end portion 15, at the coronal end thereof, that has a length L₅, and is positioned remote from the apical end 100; and
D₄ : maximum outer diameter of the helical thread 11 of an apical end portion 15 close to the truncated apical end 100 of the apical portion 10.

Some specific practical embodiments of the present fixtures of dental implants have the following approximate dimensions:
- Shortest total length: 3,5 to 4 mm;
- Maximum total length: between 5 and up to less than 6 mm;
- Bone length (L₂) : 3,5 to 5,5 mm, typically 4,5 mm;
- Soft tissue portion (L₃) : 0,7 to 2 mm, typically 1 mm;
- Length of a first tapered portion of the helical thread (L₄) : 2,3 to 3,6 mm, typically 2/3 of the bone length L₂;
- Length of a second tapered portion of the helical thread (L₅) : 1,12 to 1,84 mm, typically 1/3 of the bone length L₂;
- Maximum outer diameter (D₁): 3,5 to 5 mm, typically 4,5 mm;
- Bone anchor area: approx. 50 to 94 mm², typically 64 mm²

These specific practical embodiments have proven to provide sufficient force transmission as required by dental implants.

The threaded cavity 13, 23, 33 of embodiments of fixtures of dental implants has a ratio of its depth to a bone length (L₂) of the dental implant in the range of approximately 0,8 to 1,2, such as 0,8 or 1,2, including 1,0, and a total length of the dental implant is less than 6 mm, or equal to approximately 6 mm.

A ratio of the maximum outer diameter to the total length of the fixture of the two-part dental implant is in the range of approximately 0,83 to 1,14.

A ratio of the extension of the coronal portion 14, 24, 34 (L₃) to the longitudinal extension of the apical portion 10, 20, 30 (L₂), i.e. the bone length, is in the range of approximately 0,13 to 0,57, and a total length of the fixture of the two-part dental implant is less than 6 mm.

A ratio of the bone anchoring area (n * D * L₂) to the total length of embodiments of the fixture of the dental implant is in the range of approximately 12,5 to 15,6 m.

In embodiments of the fixture of the dental implant, the maximum outer diameter of the thread 11, D₁, is larger than the maximum outer diameter of the coronal portion 14, D₂. Thanks to this feature, the need for a countersink cutter is eliminated. A single surgical drill is sufficient for preparing the bore into which the dental implant is to be implanted, providing for economical savings as both less tools and treatment time are necessary for implanting dental implants according to embodiments. As little bone tissue is available at implantation sites of resorbed jaw bone tissue, valuable bone material is saved for improved Osseointegration and stability of the dental implant, and a risk for bone resorption upon implantation of the fixture of the dental implant is reduced. Still, thanks to the advantageous design, sufficient diameter D₂ of the coronal portion is available for the internal cavity to receive at least one of a surgeon tool 50 and a prosthetic component 60 with sufficient strength and stability to facilitate a secure and reliable installation.

In embodiments the diameter D₁ is approximately 10 to 20% larger than the diameter D₂, in particular approximately 15%.

The fixtures of the dental implants 1, 2, 3 may, at least at the apical portion 10, 20, 30, be provided with a bone growth enhancement agent layer and/or surface for improved osseointegration.

In summary, improved, short implants are provided, which are devised to maximally use an available bone length, which still are unloaded and soft tissue integrated when implanted, while safety of the implant upon implantation is at least maintained or improved. A risk of bone resorption upon implantation of the dental implant is substantially reduced or eliminated.

In contrast to simply cutting existing implants shorter in order to be able to provide dental implants for patients having little or too little bone left for securing conventional dental implants, a margin for avoiding bone resorption is provided at the coronal portion of the dental implant.

In an embodiment a kit is provided comprising a plurality of embodiments of fixtures of dental implants. The kit may also comprise an insertion tool 50 and suitable surgical drills.

Furthermore, a method of improving stability of dental implants in bone tissue is provided. The method comprises implanting a fixture of a two-piece dental implant according to embodiments in bone tissue 80. The implanting comprises appositioning to the bone tissue of an apical portion 10, 20, 30 comprising a helical thread 11, 21, 31 of the dental implant 1, 2, 3 by rotational movement of a surgeon tool 50 releasably interlocking with a top portion 12, 22, 32 of the dental implant 1, 2, 3 that has a threaded cavity 13, 23, 33. The rotational movement is performed until a coronal portion 14, 24, 34 of the dental implant 1, 2, 3 is appositioned to soft tissue 70 above the bone tissue 80 and the apical portion 10, 20, 30 is positioned at or below a crest 81 of the bone tissue 80, whereby the coronal portion 14, 24, 34 is embedded in a portion 72 of the soft tissue 70.

The method further comprises mounting a temporary healing abutment 60 into the threaded cavity 13, 23, 33 of the top portion 12, 22, 32 of the dental implant 1, 2, 3 having a threaded cavity.

Fig. 5 is a schematic view of this situation, showing a fixture of a two-piece dental implant 3 implanted in bone tissue 80.

As can be seen, the implant is to a substantial part implanted in the bone tissue 80. A nerve or blood vessel 75 is shown schematically distally the apical end of the dental implant 3 in the bone tissue 80. A safety margin 76 between the apical end and the nerve or blood vessel 75 is advantageously provided as the fixture of the two-part dental implant 3 has a short length, while required stability of the dental implant 3 in the bone tissue 80, for carrying a dental restoration, is provided.

A gingival crevice 73 is shown as the space between the surface of the abutment 60 and the free gingiva, i.e. the portion of the gingiva that surrounds the abutment 60 and is not directly attached to the abutment surface.

After a healing period the temporary healing abutment 60 is removed and a position in space of the top portion of the dental implant is registered for producing a permanent prosthetic component. Then the temporary healing abutment 60 or another temporary abutment is re-mounted into the threaded cavity. The prosthetic component is produced and the temporary abutment is removed again. Then the produced final prosthetic component is mounted into the threaded cavity, e.g. a dental bridge or crown via an abutment.

This change of abutments or prosthetic components does not alter stability of the dental implant in bone tissue, as the layer of connective tissue 72 is not affected by the mechanical stress implied. The gingival crevice 73 will not extend down along the dental implant 3, and stability of the dental implant 3 in the bone tissue 80 is ensured as well as bone resorption is prevented.

The present invention has been described above with reference to specific embodiments. However, other embodiments than the above described are equally possible within the scope of the invention. The different features and steps of the invention may be combined in other combinations than those described. The scope of the invention is only limited by the appended patent claims.

## Claims

1. A fixture (1, 2, 3) of a two-piece dental implant for implantation at an implantation site comprising bone tissue (80) and soft tissue (70), the fixture comprising
a first, apical portion (10, 20, 30) having a bone length (L₂), devised for apposition to said bone tissue (80), and comprising a helical thread (11, 21, 31) having a maximum outer diameter (D₁);
a top portion (12, 22, 32) arranged opposite said first, apical portion (10, 20, 30), in a longitudinal direction of said fixture;
an internal threaded cavity (13, 23, 33) for releasably receiving at least one of a surgeon tool (50) and a prosthetic component (60), extending from an opening at said top portion (12, 22, 32) towards said first, apical portion; and
a second, coronal portion (14, 24, 34) devised for apposition to said soft tissue (70) and for connective tissue attachment, which second, coronal portion (14, 24, 34) is arranged from said top portion towards said first, apical portion (10, 20, 30);
wherein said second, coronal portion (14, 24, 34) has an extension (L₃) in the longitudinal direction of said fixture (1, 2, 3) that is devised to be less than a layer thickness of said soft tissue (70); and
wherein a ratio of said bone length (L₂) to said maximum outer diameter (D₁) is in the range from approximately 0,8 to 1,2.

2. The fixture according to claim 1, wherein said extension of said second, coronal portion (14, 24, 34) is devised to be substantially equal to a height of connective tissue (72) of said soft tissue (70) at said implantation site.

3. The fixture according to claim 1 or 2, wherein said second, coronal portion (14, 24, 34) is devised to promote growth of connective tissue (72) in apposition to said second, coronal portion (14, 24, 34) upon implantation of said fixture at said implantation site.

4. The fixture according to any of the preceding claims 1-3, wherein a ratio of the extension (L₃) of the coronal portion (14, 24, 34) to said bone length (L₂) of said the apical portion (10, 20, 30) is in the range of approximately 0,18 to 0,28.

5. The fixture according to any of the preceding claims 1-4, wherein said maximum outer diameter (D₁) of the helical thread (11, 21, 31) is larger than a maximum outer diameter (D₂) of said coronal portion (14, 24, 34).

6. The fixture according to claim 5, wherein said maximum outer diameter (D1) is approximately 10% to 20% larger than said maximum outer diameter (D2) of said coronal portion (14, 24, 34).

7. The fixture according to any of the preceding claims 1-6, wherein said first, apical portion (10, 20, 30) is devised to be arranged at or below an alveolar ridge (81) of said bone tissue (80) at said implantation site.

8. The fixture according to any of the preceding claims 1-7, wherein said threaded cavity (13, 23, 33) has a depth in ratio to said bone length (L₂) of said fixture in the range of 0,96 to 1.

9. The fixture according to any of the preceding claims 1-8, wherein said fixture has a maximum outer diameter and a total length, wherein
a ratio of said maximum outer diameter to said total length is in the range of 0,83 to 1,14.

10. The fixture according to any of the preceding claims 1-9, wherein a ratio of said extension (L₃) of the coronal portion (14, 24, 34) in the longitudinal direction of said fixture (1, 2, 3) to said bone length (L₂) is in the range of approximately 0,13 to 0,57, and a total length of the dental implant is less than 6 mm.

11. The fixture according to any of the preceding claims 1-10, wherein said fixture has a bone anchoring surface, wherein a ratio of said bone anchoring surface n * D * L to a total length of said fixture is in the range of 12,5 to 15,6 m.

12. The fixture according to any of the preceding claims 1-11, wherein said helical thread (11, 21, 31) is tapered towards a truncated apical end (100, 200, 300) of said fixture for improving primary stability of said dental implant upon implantation, wherein said helical thread (11, 21, 31) is tapered in a plurality of tapered portions having increasing angles of taper towards said apical end of said fixture.

13. The fixture according to any of the preceding claims 1-12, wherein said helical thread (11, 21, 31) extends continuously along the entirety of said bone length (L₂) from said coronal portion (14, 24, 34) to staid truncated apical end (100, 200, 300) of said fixture.

14. The fixture according to any of the preceding claims 1-13, wherein said second, coronal portion (14, 24, 34) comprises at least one curved macro recess.

15. The fixture according to any of the preceding claims 1-14, wherein said second, coronal portion (14, 24, 34) comprises a plurality of micro recesses.

16. A method of improving stability of dental implants in bone tissue comprising
implanting a fixture of a two-piece dental implant according to any of claims 1 to 15 at an implantation site for said fixture comprising bone tissue (80) and soft tissue (70), said implanting comprising
appositioning an apical portion (10, 20, 30) to said bone tissue (80) with a helical thread (11, 21, 31) thereof by rotational movement of a surgeon tool (50) releasably interlocking with a top portion (12, 22, 32) of said fixture (1, 2, 3) having a threaded cavity (13, 23; 33) until a coronal portion (14, 24, 34) of said fixture (1, 2, 3) is appositioned to said soft tissue (70) above said bone tissue (80) and said apical portion (10, 20, 30) is positioned at or below a crest (81) of said bone tissue (80), thereby embedding said coronal portion (14, 24, 34) in a connective tissue portion (72) of said soft tissue (70).

17. The method according to claim 16, further comprising
mounting a temporary healing abutment (60) into said threaded cavity (13, 23, 33) of said top portion (12, 22, 32) of said fixture having a threaded cavity;
removing said temporary healing abutment (60) after a healing period and registering a position in space of said top portion of said fixture for producing a permanent prosthetic component, and re-mounting a temporary abutment (60) into said threaded cavity;
producing said prosthetic component; and
removing said temporary abutment and mounting said prosthetic component into said threaded cavity, without altering a connective tissue attached to said coronal portion (14, 24, 34).
